(19) Europäisches Patentamt
European Patent Office
Office européen des brevets

(11) EP 3 735 434 B1

(12) EUROPEAN PATENT SPECIFICATION

(45) Date of publication and mention of the grant of the patent:
**16.03.2022 Bulletin 2022/11**

(21) Application number: **18816145.9**

(22) Date of filing: **18.12.2018**

(51) International Patent Classification (IPC):
***C08G 59/50*** (2006.01)

(52) Cooperative Patent Classification (CPC):
**C08G 59/5026**

(86) International application number:
**PCT/EP2018/085597**

(87) International publication number:
**WO 2019/134824 (11.07.2019 Gazette 2019/28)**

(54) **CURING AGENTS FOR EPOXY RESINS WITH LOW TENDENCY TO THE FORMATION OF CARBAMATES**

HÄRTER FÜR EPOXIDHARZE MIT GERINGER NEIGUNG ZUR BILDUNG VON CARBAMATEN

DURCISSEURS POUR RÉSINES ÉPOXYDES À FAIBLE TENDANCE À LA FORMATION DE CARBAMATES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2018 EP 18150314**

(43) Date of publication of application:
**11.11.2020 Bulletin 2020/46**

(73) Proprietor: **BASF SE**
**67056 Ludwigshafen am Rhein (DE)**

(72) Inventors:
- **PANCHENKO, Alexander**
  **67056 Ludwigshafen (DE)**
- **KOPCZYNSKI, Matthaeus**
  **67056 Ludwigshafen (DE)**
- **HENNINGSEN, Michael**
  **67056 Ludwigshafen (DE)**
- **HOFMANN, Marc**
  **26131 Oldenburg (DE)**
- **GORMAN, Irene**
  **67056 Ludwigshafen (DE)**

(74) Representative: **BASF IP Association**
**BASF SE**
**GBI-C006**
**67056 Ludwigshafen (DE)**

(56) References cited:
**EP-A1- 3 205 682 WO-A2-2016/100222**

EP 3 735 434 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for the preparation of a cured epoxy resin by curing a curable composition comprising an epoxy resin and an adduct at a curing temperature in the range of 0 °C to 100 °C, characterized in that the adduct is formed by reacting methylcyclohexyl diamine with a diglycidyl ether diol, and that the composition is exposed to humidity at least part of the initial 24 h time period of the curing starting with the time mixing epoxy resin and adduct of the composition, and wherein the methylcyclohexyl diamine is 1-methylcyclohexyl-2,4-diamine, 1-methylcyclohexyl-2,6-diamine or a mixture thereof. The invention also relates to a corresponding coating process for the preparation of an epoxy resin coated material by applying to the surface of the material the curable composition. The methylcyclohexyl diamine based adducts exhibit a low tendency to the formation of carbamates (blushing) during the curing of epoxy resins and therefor are particularly suitable for the curing of epoxy resins in the presence of humidity, e.g. in flooring applications. The present invention also relates to a hardener component, comprising such a methylcyclohexyl diamine based adduct and a diluent selected from the group consisting of benzyl alcohol, bisphenol A, and alkyl substituted phenols, as well as the corresponding curable composition where the hardener component is combined with an epoxy resin, and the cured epoxy resin thereof.

The aim of industrial maintenance coatings is to protect surfaces, such as concrete, from degradation in aggressive environments. Due to their good adhesion, high mechanical and thermal properties, and good chemical resistance, epoxy-based systems are well suited to this task (Chen, X. M.; Ellis, B., Coatings and other applications of epoxy resins. In Chemistry and Technology of Epoxy Resins, Ellis, B., Ed. Springer: 1993; pp 303-325). Epoxy resins can be hardened with a variety of co-reactants, including amines, phenols, thiols, and carboxylic acids, leading to a wide range of handling and performance profiles. Cycloaliphatic diamine type hardeners are used extensively in flooring applications (Pham, H. Q.; Marks, M. J., Epoxy Resins. In Ullmann's Encyclopedia of Industrial Chemistry, 2005), because they offer a balance between ease-of-handling and final properties, such as fast cure, low viscosity, low toxicity, good adhesion, and excellent color stability. Typical cycloaliphatic diamines used as epoxy resin curing agents are isophorone diamine (IPDA), 1,2-diaminocyclohexane (DACH), bis(4-aminocyclohexyl)methane (PACM), or methylcyclohexyl diamine (MCDA). MCDA, which has a lower viscosity than IPDA, consists of two regioisomers, 2,4- and 2,6-MCDA, with 2,4-MCDA and 2,6-MCDA consisting of four and three stereoisomers, respectively (WO2011/033104). Both IPDA and MCDA readily react with epoxy resins under ambient or sub-ambient temperatures, and the low viscosities of MCDA and IPDA allow for greater freedom in formulation and/or extended working pot-life. Arylyl amines such as meta-xylene diamine (MXDA) and its dehydrogenated counterpart 1,3-bis(aminomethyl cyclohexane) (1,3-BAC) exhibit similar characteristics as cycloaliphatic diamines. In flooring applications, amines are often used in adduct form, where excess amine is pre-reacted with epoxy resin. Such chemical modification affords products with better handling properties, lower vapor pressure, reduced tendency to blush, and less critical mix ratio. These advantages come at a cost however; adduction leads to a significant increase in viscosity. To lower viscosity, amine adducts are often formulated with diluents such as benzyl alcohol (BnOH), with in addition to serving as a viscosity reducer, can also accelerate the epoxy/amine reaction at ambient or sub-ambient temperatures.

Susceptibility to blushing is a downside of most amine curing agents. Blushing is caused by the formation of carbamates salts, which form when hygroscopic primary amines react with atmospheric carbon dioxide and water (T. Dinnissen, "Amine Blushing and Blooming of Epoxy Binder Systems in Protective Coatings" J. of Protective Coatings and Linings, 2005, Vol. 22, p. 40-45). These salts tend to phase separate from the reacting mass and migrate to the surface, which leads to blushing. Blushing can have detrimental effects on gloss, color, and inter-coat adhesion (Pham, H. Q.; Marks, M. J., Epoxy Resins. In Ullmann's Encyclopedia of Industrial Chemistry, 2005; Wicks, W. Z.; Jones, F. N.; Pappas, S. P.; Wicks, D. A., Epoxy and Phenolic Resins. In Organic Coatings Science and Technology Third Edition, Wiley: Hoboken, 2007; pp 271-293). In epoxy resin application where the resin might be exposed to atmospheric carbon and humidity, e.g. air humidity or liquid water, during the curing, such as coating applications, in particular flooring applications, such blushing is a problem. T. Dinnissen teaches that the usually used epoxy resin compositions with low molecular weight (cyclo-) aliphatic amine curing agents are very susceptible to blushing or blooming, and that this disadvantage could be overcome if epoxy or Mannich-base adducts of such low molecular weight amines are employed, but no specific adducts are disclosed.

There is a need, for example for flooring applications, to have curing agents for epoxy resins which can be used in the presence of air humidity or liquid water during the curing without or at least with reduced negative side effects such as blushing or blooming caused by the formation of carbamates or other negative impact on the surface of the curing or cured epoxy resin, and to have processes for the amine curing of epoxy resin compositions which are in contact to air humidity or liquid water during the curing, wherein these negative side effects are prevented or at least reduced.

The inventors found that adducts of MCDA and diglycidyl ether diols are curing agents which exhibit an unexpectedly advantageous curing of epoxy resins which are in contact to air humidity or liquid water during the curing. Such MCDA-based adducts were found to have greater stability against carbamate formation relative to other diamine-based adducts. Carbamate formation is detrimental not only to spectral gloss, but also to yellowing and inter-coat adhesion.

The above described task has been solved by the following process or hardener.

Accordingly, the present invention provides a process for the preparation of a cured epoxy resin by curing a curable composition comprising an epoxy resin and an adduct ("MCDA-based adduct") at a curing temperature in the range of 0 °C to 100 °C, characterized in that the adduct is formed by reacting methylcyclohexyl diamine with a diglycidyl ether diol, and that the composition is exposed to humidity at least part of the initial 24 h time period of the curing starting with the time mixing epoxy resin and adduct of the composition, and wherein the methylcyclohexyl diamine (MCDA) is 1-methylcyclohexyl-2,4-diamine (2,4-MCDA), 1-methylcyclohexyl-2,6-diamine (2,6-MCDA) or a mixture thereof.

Subject matter of the present invention is also a coating process for the preparation of an epoxy resin coated material by applying to the surface of the material a curable composition comprising an epoxy resin and an adduct ("MCDA-based adduct"), and subsequently curing the curable composition on the surface at a curing temperature in the range of 0 °C to 100 °C, characterized in that the adduct is formed by reacting methylcyclohexyl diamine with a diglycidyl ether diol, and that the composition is exposed to humidity at least part of the initial 24 h time period of the curing starting with the time mixing epoxy resin and adduct of the composition, and wherein the methylcyclohexyl diamine (MCDA) is 1-methylcyclohexyl-2,4-diamine (2,4-MCDA), 1-methylcyclohexyl-2,6-diamine (2,6-MCDA) or a mixture thereof. In a particular embodiment, such coating process is the coating of a floor ("flooring"). Preferably the material to be coated is selected from the group consisting of concrete, natural stone, and steel.

Subject matter of the present invention is also a mixture for curing epoxy resin ("hardener component"), comprising a diluent and an adduct ("MCDA-based adduct") characterized in that the adduct is formed by reacting methylcyclohexyl diamine with a diglycidyl ether diol, wherein the diluent is selected from the group consisting of benzyl alcohol, bisphenol A, and alkyl substituted phenols, and wherein the methylcyclohexyl diamine (MCDA) is 1-methylcyclohexyl-2,4-diamine (2,4-MCDA), 1-methylcyclohexyl-2,6-diamine (2,6-MCDA) or a mixture thereof. Such hardener component is particularly suitable for the curing of epoxy resins in applications, e.g. coating applications such as flooring, where exposure of the epoxy resin composition to humidity during the curing cannot be avoided, or where the epoxy resin composition at least may be exposed to humidity during the curing.

Subject matter of the present invention is also a curable composition, comprising the hardener component of the invention and an epoxy resin. Such a curable composition is particularly suitable for coating applications, where exposure of the coating to humidity during the curing cannot be avoided, or where the coating at least may be exposed to humidity during the curing.

The following formulas I to VII represent the isomers of MCDA (stereoisomers of 2,4-MCDA (formula I to IV) and stereoisomers of 2,6-MCDA (formula V to VII):

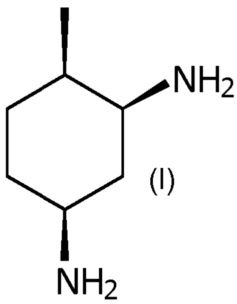
(I)
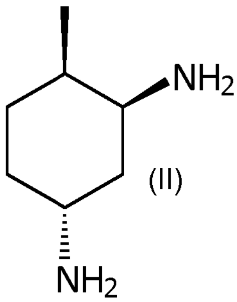
(II)
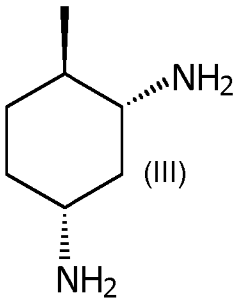
(III)
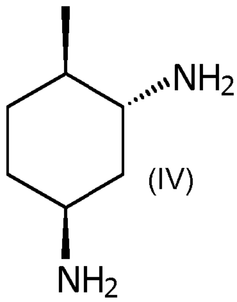
(IV)

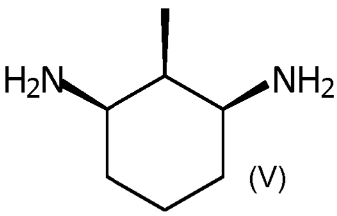
(V)
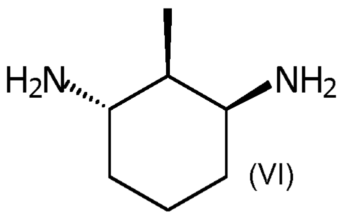
(VI)
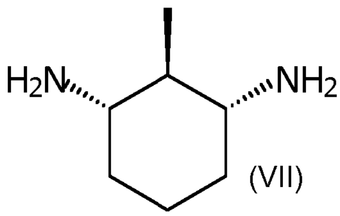
(VII)

<u>Isomer Mixture of Methylcyclohexyl Diamine (MCDA)</u>

The following formula VIII shows an idealized structure of an MCDA-based adduct according to the invention, composed of e.g. two MCDA moieties (e.g. 2,6-MCDA) and one diglycidyl ether diol moiety (e.g. bisphenol-A diglycidyl ether):

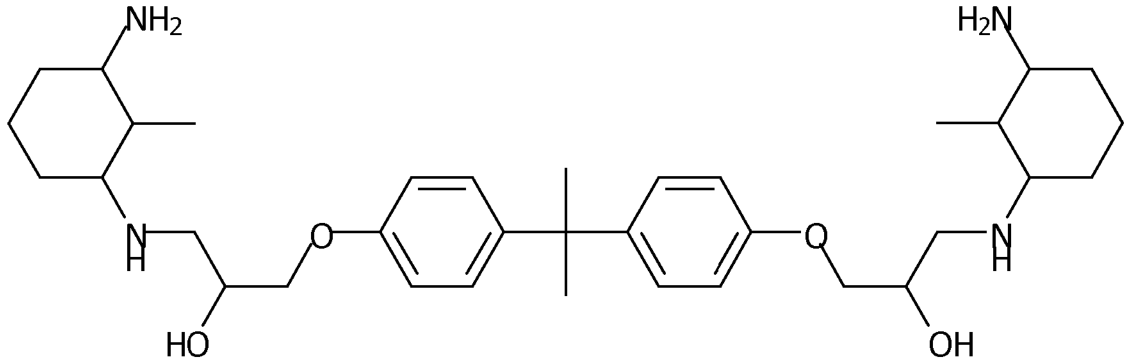

(VIII)

In the curing process and the coating process of the invention, the composition is exposed to humidity at least part of the initial 24 h time period of the curing starting with the time mixing epoxy resin and adduct of the composition. In a particular embodiment of these processes, the composition is exposed to humidity at least part of the initial 12 h time period, more particularly the initial 6 h time period, of the curing starting with the time mixing epoxy resin and adduct of the composition. In a particular embodiment of these processes, the exposure to humidity lasts a total of at least 30 min, particularly at least 60 min, more particularly at least 120 min during the initial time period of curing.

The hardener component of the invention comprises a diluent selected from the group consisting of benzyl alcohol, bisphenol A, and alkyl substituted phenols. The hardener component may also comprise mixtures of such diluents. In a particular embodiment, the diluent is benzyl alcohol. In another particular embodiment, the diluent is an alkyl substituted phenol. Preferred alkyl substituted phenols for the purpose of this invention are nonylphenol and tert-butyl phenol, e.g. para-tert-butyl phenol.

In a particular embodiment of the process of the invention, the humidity is relative air humidity, wherein the relative air humidity has a value of at least 50 %, particularly at least 70 %, more particularly at least 85 %. In a further particular embodiment of the process according to the invention, the humidity is liquid water which is contact to the surface of the composition. The relative air humidity can be determined in accordance with the VDI/VDE guidelines 3514 "Measurement of gas humidity - method of measurement", part 2 (March 2013), e.g. by means of psychrometric method, condensation methods, such as optical, electric or thermal dew point hygrometer, conductance methods, capacitive methods, or vibrating quartz methods. For the purpose of this invention, the relative air humidity is measured by the means of a calibrated capacitive hygrometer using a polymer sensor.

The curing temperature for the curing of epoxy resins according to the invention is in the range of 0 °C to 100 °C, preferably in the range of 5 °C to 50 °C, more preferably in the range of 5 °C to 30 °C.

In a preferred embodiment of the curing process and the hardener component of the invention, the methylcyclohexyl diamine is a mixture of 1-methylcyclohexyl-2,4-diamine and 1-methylcyclohexyl-2,6-diamine with a molar ratio ranging from 60 % : 40 % to 95 % : 5 %.

Epoxy resins according to this invention usually have from 2 to 10, preferably from 2 to 6, very particularly preferably from 2 to 4, and in particular 2, epoxy groups. The epoxy groups are in particular the glycidyl ether groups that are produced in the reaction of alcohol groups with epichlorohydrin. The epoxy resins can be low-molecular-weight compounds which generally have an average molar mass ($M_n$) smaller than 1000 g/mol or relatively high-molecular-weight compounds (polymers). These polymeric epoxy resins preferably have a degree of oligomerization of from 2 to 25, particularly preferably from 2 to 10, units. They can be aliphatic or cycloaliphatic compounds, or compounds having aromatic groups. In particular, the epoxy resins are compounds having two aromatic or aliphatic 6-membered rings, or oligomers thereof. Epoxy resins important in industry are obtainable via reaction of epichlorohydrin with compounds which have at least two reactive hydrogen atoms, in particular with polyols. Particularly important epoxy resins are those obtainable via reaction of epichlorohydrin with compounds comprising at least two, preferably two, hydroxy groups and comprising two aromatic or aliphatic 6-membered rings. Preferred epoxy resins of the invention are diglycidyl ether diols selected from a group consisting of diglycidyl ether of bisphenol A, diglycidyl ether of bisphenol F, diglycidyl ether of hydrogenated bisphenol A, and diglycidyl ether of hydrogenated bisphenol F, and any mixture thereof. Bisphenol A diglycidyl ether (DGEBA) is usually used as epoxy resin according to this invention. Other suitable epoxy resins according to this invention are tetraglycidylmethylenedianiline (TGMDA) and triglycidylaminophenol, and mixtures thereof. It is also possible to use reaction products of epichlorohydrin with other phenols, e.g. with cresols or with phenol-aldehyde adducts, for example with phenol-formaldehyde resins, in particular with novolaks. Other suitable epoxy resins are those which do not derive from epichlorohydrin. It is possible to use, for example, epoxy resins which comprise epoxy groups via reaction with glycidyl (meth)acrylate. It is preferable in the invention to use epoxy resins or mixtures thereof which are liquid at room temperature (23 °C). The epoxy equivalent weight (EEW) gives the average mass of the epoxy resin in

g per mole of epoxy group.

It is preferable that the curable composition of the invention is composed of at least 30 %, preferably at least 50 % by weight of epoxy resin.

The diglycidyl ether diol of the invention for the preparation of MCDA-based adducts is a diglycidyl ether of a diol which can be prepared for example by reacting the diol with two molecules of epichlorohydrin. It can be a monomer or an oligomer or mixtures thereof with the general formula IX

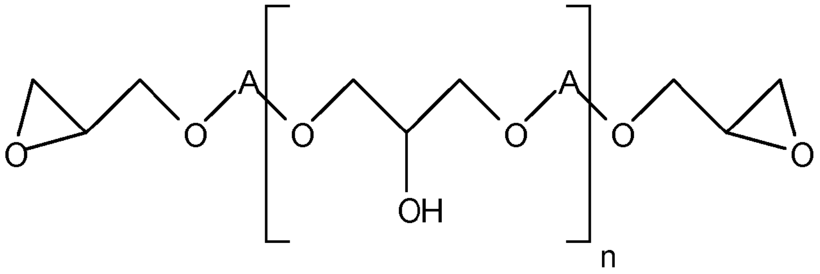

(IX),

wherein A is an aliphatic, cycloaliphatic, arylaliphatic or aromatic organic residue, preferably having 6 to 20 C-Atoms and n = 0 to 10, preferably n = 0 to 2. In a particular embodiment of the invention, the diglycidyl ether diol is a monomer with the general Formula IX where n = 0. In a particular embodiment of the invention the residue A exhibits substituents with heteroatoms (atoms which are not C- or H-atoms) bound to the aliphatic, cycloaliphatic, arylaliphatic or aromatic backbone, for example such substituents are halogen atoms such as Cl- or Br-atoms. On another particular embodiment of the invention, the residue A exhibits no heteroatoms. Preferably the diglycidyl ether diol of the invention for the preparation of MCDA-based adducts is selected from a group consisting of diglycidyl ether of bisphenol A, diglycidyl ether of bisphenol F, diglycidyl ether of hydrogenated bisphenol A, and diglycidyl ether of hydrogenated bisphenol F, and any mixture thereof. The diglycidyl ether diol employed for the preparation of the MCDA-adduct and the epoxy resin to be cured by the MCDA-adduct can be same or different according to the invention.

The MCDA-based adduct of the invention is prepared by the reaction of methylcyclohexyl diamine and diglycidyl ether diol, preferably by using a molar ratio ranging from 20 : 1 to 2 : 1, more preferably ranging from 20 : 1 to 5 : 1.The reaction is carried out preferably at a temperature in the range from 10 °C to 150 °C, more preferably at a temperature in the range of 70 °C to 130 °C. In a particular embodiment, the MCDA-based adduct is prepared in the presence of a diluent selected from the group consisting of benzyl alcohol, bisphenol A, and alkyl substituted phenols, preferably by using a molar ratio ranging from particular preferably ranging from 5 : 1 to 2 : 1 (methylcyclohexyl diamine to diglycidyl ether diol). In a particular embodiment, the diluent is benzyl alcohol. In another particular embodiment, the diluent is an alkyl substituted phenol. Preferably the diluent and the methylcyclohexyl diamine are employed with a weight ratio ranging from 2 : 1 to 1 : 2 to prepare the MCDA-based adduct.

The empirical amine hardener equivalent weight ($AHEW_{emp}$) of the MCDA-based adduct of the invention is preferably in the range from 30 to 110 g/eq (for the reaction product of the diglycidyl ether diol and the excess of MCDA without any subsequent purification or separation of the reaction mixture after adduct formation).

Preferably, a ratio of at least 50 % b.w. of the MCDA-based adduct are the reaction product of one molecule of diglycidyl ether diol and two molecules of methylcyclohexyl diamine. In the context of the invention, an MCDA-based adduct is the reaction product of at least one molecule of diglycidyl ether diol and at least one molecule of methylcyclohexyl diamine.

In a particular embodiment of the curing process of the invention, the curable composition comprises also a diluent selected from the group consisting of benzyl alcohol, bisphenol A, and alkyl substituted phenols, preferably in a range from 5 to 50 % b.w., particularly from 10 to 30 % b.w. based on the total amount of MCDA-based adduct and epoxy resin of the composition. In a particular embodiment, the diluent is benzyl alcohol. In another particular embodiment, the diluent is an alkyl substituted phenol.

In a preferred embodiment of the curing process of the invention, the employed MCDA-based adduct is formed in the presence of a diluent selected from the group consisting of benzyl alcohol, bisphenol A, and alkyl substituted phenols. Preferably, the diluent and the methylcyclohexyl diamine are employed with a weight ratio ranging from 2 : 1 to 1 : 2 to prepare the MCDA-based adduct. In a particular embodiment, the diluent is benzyl alcohol. In another particular embodiment, the diluent is an alkyl substituted phenol.

In the hardener component of the invention, the MCDA-based adduct and the diluent selected from the group consisting of benzyl alcohol, bisphenol A, and alkyl substituted phenols are contained in a weight ratio ranging from 2 : 1 to 1 : 2. Preferably the diluent is already added during the formation of the MCDA-based adduct. In a particular embodiment, the diluent is benzyl alcohol. In another particular embodiment, the diluent is an alkyl substituted phenol.

In a particular embodiment of the process and curable composition of the invention, the composition also

comprises reactive diluents. Reactive diluents in the meaning of this invention are compounds which reduce the initial viscosity of the curable composition and which, during the course of the curing of the curable composition, enter into chemical bonding with the network as it forms from epoxy resin and hardener. For the purposes of this invention, preferred reactive diluents are low-molecular-weight, organic, preferably aliphatic compounds having one or more epoxy groups, and also cyclic carbonates. Reactive diluents of the invention are preferably selected from the group consisting of ethylene carbonate, vinylene carbonate, propylene carbonate, 1,4-butanediol bisglycidyl ether, 1,6-hexanediol bisglycidyl ether (HDBE), glycidyl neodecanoate, glycidyl versatate, 2-ethylhexyl glycidyl ether, neopentyl glycol diglycidyl ether, p-tert-butyl glycidic ether, butyl glycidic ether, $C_8$-$C_{10}$-alkyl glycidyl ether, $C_{12}$-$C_{14}$-alkyl glycidyl ether, nonylphenyl glycidic ether, p-tert-butyl phenyl glycidic ether, phenyl glycidic ether, o-cresyl glycidic ether, polyoxypropylene glycol diglycidic ether, trimethylolpropane triglycidic ether (TMP), glycerol triglycidic ether, triglycidyl-para-aminophenol (TGPAP), divinylbenzyl dioxide and dicyclopentadiene diepoxide. They are particularly preferably selected from the group consisting of 1,4-butanediol bisglycidyl ether, 1,6-hexanediol bisglycidyl ether (HDBE), 2-ethylhexyl glycidyl ether, $C_8$-$C_{10}$-alkyl glycidyl ether, $C_{12}$-$C_{14}$-alkyl glycidyl ether, neopentyl glycol diglycidyl ether, p-tert-butyl glycidic ether, butyl glycidic ether, nonylphenyl glycidic ether, p-tert-butylphenyl glycidic ether, phenyl glycidic ether, o-cresyl glycidic ether, trimethylolpropane triglycidic ether (TMP), glycerol triglycidic ether, divinylbenzyl dioxide and dicyclopentadiene diepoxide. They are in particular selected from the group consisting of 1,4-butanediol bisglycidyl ether, $C_8$-$C_{10}$-alkyl monoglycidyl ether, $C_{12}$-$C_{14}$-alkyl monoglycidyl ether, 1,6-hexanediol bisglycidyl ether (HDBE), neopentyl glycol diglycidyl ether, trimethylolpropane triglycidic ether (TMP), glycerol triglycidic ether, and dicyclopentadiene diepoxide. The reactive diluents of the invention preferably make up a proportion of up to 25 % by weight, particularly preferably up to 20 % by weight, in particular from 1 to 15 % by weight, based on the entire curable composition.

In a particular embodiment of the process, hardener component and curable composition of the invention, the composition or hardener component also comprises, alongside the MCDA-based adduct of the invention other aliphatic, cycloaliphatic, or aromatic polyamines, including other adducts, as additional amine hardener. It is preferable that the MCDA-based adduct of the invention makes up at least 50 % by weight, particularly at least 80 % by weight, very particularly at least 90 % by weight, based on the total weight of the amine hardeners in the curable composition. In one particular embodiment, the curable composition or hardener component comprises no other amine hardeners alongside the MCDA-based adduct of the invention. In one particular embodiment, the curable composition or hardener component comprises alongside the MCDA-based adduct of the invention only MCDA, in particular only the residual MCDA which has been employed in excess for the preparation of the MCDA-based adduct. For the purposes of the present invention, the expression amine hardener means an amine with NH functionality $\geq 2$ (where by way of example a primary monoamine has NH functionality 2, a primary diamine has NH functionality 4, and an amine having 3 secondary amino groups has NH functionality 3). Examples of such additional amine hardeners are the amines selected from the group consisting of 2,2-dimethyl-1,3-propanediamine, 1,3-pentanediamine (DAMP), 1,5-pentanediamine, 1,5-diamino-2-methylpentane (MPMD), 1,6-hexanediamine, 1,7-heptanediamine, 1,8-octanediamine, 1,9-nonanediamine, 1,10-decanediamine, 1,11-undecanediamine, 1,12-dodecanediamine, 2,5-dimethyl-1,6-hexanediamine, 2,2,4- and 2,4,4-trimethylhexamethylenediamine (TMD), dimethyl dicykan (DMDC), isophoronediamine (IPDA), methylcyclohexyl diamine (MCDA), diethylenetriamine (DETA), triethylenetetramine (TETA), aminoethylpiperazine (AEP), meta-xylylene diamine (MXDA), styrene modified MXDA (Gaskamine 240), 1,3-bis(aminomethyl cyclohexane) (1,3-BAC), bis(p-aminocyclohexyl)methane (PACM), methylenedianiline (e.g. 4,4'-methylenedianiline), polyetheramines (e.g. polyetheramine D230, poly(glycol amine)), diaminodiphenylmethane (DDM), diaminodiphenylsulfone (DDS), 2,4-toluenediamine, 2,6-toluenediamine, diethyltoluenediamine (DETDA) (e.g. 2,4-diamino-3,5-diethyltoluene or 2,6-diamino-3,5-diethyltoluene, 1,2-diaminobenzene), 1,3-diaminobenzene, 1,4-diaminobenzene, diaminocyclohexane (e.g. 1,2-diaminocyclohexane (DACH)), 1,8-menthanediamine, diaminodiphenyl oxide, 3,3',5,5'-tetramethyl-4,4'-diaminobiphenyl and 3,3'-dimethyl-4,4'-diaminodiphenyl, and also aminoplast resins such as, for example, condensation products of aldehydes such as formaldehyde, acetaldehyde, crotonaldehyde or benzaldehyde with melamine, urea or benzoguanamine, and also mixtures thereof. Preferably, such additional amine hardeners are the amines selected from the group consisting of 2,2,4- and 2,4,4-trimethylhexamethylenediamine (TMD), dimethyl dicykan (DMDC), isophoronediamine (IPDA), methylcyclohexyl diamine (MCDA), diethylenetriamine (DETA), triethylenetetramine (TETA), aminoethylpiperazine (AEP), meta-xylylene diamine (MXDA), styrene modified MXDA (Gaskamine 240), 1,3-bis(aminomethyl cyclohexane) (1,3-BAC), bis(p-aminocyclohexyl)methane (PACM), polyetheramines (e.g. polyetheramine D230, poly(glycol amine)), diaminocyclohexane (e.g. 1,2-diaminocyclohexane (DACH)), and mixtures thereof.

In a particular embodiment of the process, hardener component and curable composition of the invention, the composition or hardener component also comprises other additives, for example inert diluents (others than benzyl alcohol, bisphenol A or alkyl substituted phenols), curing accelerators, reinforcing fibers (in particular glass fibers or carbon fibers), pigments, dyes, fillers, release agents, tougheners, flow agents, antifoams, flame-retardant agents, or thickeners. It is usual to add a functional amount of these additives, an example being a pigment in an amount which leads to the desired color of the composition. The compositions of the invention usually comprise from 0 to 50 % by weight, preferably from 0 to 20 % by weight, for example from 2 to 20 % by weight, of the entirety of all of the additives,

based on the entire curable composition.

Proper selection of co-hardener(s), accelerator, plasticizer, and solvent can be used to further fine tune the reaction kinetics in order to match desired applications.

In the curable composition of the invention it is preferable to use the epoxy compounds (epoxy resins and any reactive diluents having their respective reactive groups) and amine compounds of the hardener component (MCDA-based adduct and any further amine compounds employed in the composition) in an approximately stoichiometric ratio based on the reactive groups of the compounds of the resin component (epoxy groups) and, respectively, NH functionality. Particularly suitable ratios of epoxy groups of the epoxy compounds to NH functionality of the amine compounds are by way of example from 1 : 0.8 to 1 : 1.2. Alternatively, the epoxy compounds (epoxy resins and any reactive diluents having their respective reactive groups) and amine compounds of the hardener component (MCDA-based adduct and any further amine compounds employed in the composition) are employed in an approximately equivalent ratio, preferably from 1 : 0.8 to 1 : 1.2, based on the EEW of the epoxy compounds and, respectively, the $AHEW_{emp}$, of the amine compounds.

The curable compositions of the invention are suitable as coating compositions or impregnating compositions, as adhesive, for the production of moldings and of composite materials, or as casting compositions for the embedding, binding, or consolidation of moldings. Coating compositions that may be mentioned are by way of example lacquers. In particular, the curable compositions of the invention can be used to obtain scratch-resistant protective lacquers on any desired substrates, e.g. concrete, natural stone or steel. The curable compositions are also suitable as insulating coatings in electronic applications, e.g. as insulating coating for wires and cables. Mention may also be made of the use for the production of photoresists. They are also suitable as rehabilitation lacquer, including by way of example in the in-situ renovation of pipes (cure in place pipe (CIPP) rehabilitation). They are particularly suitable for the coating or sealing of floors. Composite materials (composites) comprise various materials, such as plastics and reinforcing materials (e.g. glass fibers or carbon fibers) bonded to one another.

The invention further provides moldings made of the curing composition of the invention, a coating, in particular floor coatings with early-stage water resistance) made of the curing composition, composite materials which comprise the cured composition of the invention, and also fibers impregnated or mixed with the curing composition of the invention. The composite materials of the invention preferably comprise glass fibers and/or carbon fibers.

The invention also provides the cured epoxy resin made of the curable composition of the invention. In particular, the invention provides cured epoxy resin which is obtainable, or is obtained, by curing of the curable composition of the invention. The invention in particular provides cured epoxy resin which is obtainable, or is obtained, by the process of the invention for the preparation of cured epoxy resins.

The curing compositions and the hardener components of the invention are characterized by comparable low initial viscosity. The initial viscosity of a curable composition can be determined as mixing viscosity in accordance with the standard DIN EN ISO 3219 (1994) immediately after mixing the components of the curable compositions. The mixing viscosity is determined by the means of a shear stress-controlled cone-plate rheometer (e.g. MCR 301, Anton Paar; with a plate and cone diameter of 50 mm, a cone angle of 1° and a gap distance of 0.1 mm). Temperature is a key factor of such measurement because it influences the viscosity and the curing rate of the curable composition. Accordingly, the viscosity needs to be determined at a particular temperature (e.g. room temperature (23 °C)) in order to allow comparisons. For the purpose of this invention, the viscosity of MCDA-based adducts can be determined in the same way.

The cured epoxy resins of the invention are characterized by comparable high glass transition temperatures. The glass transition temperature ($T_g$) can be determined by means of a differential calorimeter (DSC), for example in accordance with the standard ASTM D 3418 (2015). A very small amount of specimen (about 10 mg) is heated (e.g. at 20 °C/min) in an aluminum crucible, and the heat flux to a reference crucible is measured. This cycle is repeated three times. The glass transition temperature can be determined from the heat-flux curve by way of the inflexion point, or by the half-width method, or by the midpoint temperature method.

The amine hydrogen equivalent weight (AHEW) can be determined theoretically or empirically as described by B. Burton et al (Huntsman, "Epoxy Formulations using Jeffamine Polyetheramines", Apr. 27, 2005, p. 8-11). The theoretically calculated AHEW is defined by the quotient from the amine molecular weight by the number of available hydrogens (i.e.: 2 for any primary amine group plus 1 for any secondary amine group of the amine). By the way of example for IPDA, having a molecular weight of 170.3 g/mol and 2 primary amine groups resulting in 4 available amine hydrogens, the calculated AHEW is 170.3/4 = 42.6 g/eq). The determination of the empirical AHEW bases on the assumption that equivalent amounts of epoxy resin and amine hardener result in cured epoxy resins which are characterized by a maximum heat distortion temperature (HDT) and glass transition temperature ($T_g$). Accordingly, to access the empirical AHEW, proportions of the amine hardener relative to a fixed quantity of epoxy resin is varied, the blends are cured as completely as possible, and the HDTs or $T_g$s are determined and plotted against the reactant concentration. The empirical AHEW ($AHEW_{emp}$) is defined by the following formula:

$$AHEW_{emp} = (AH_{max} * EEW_{epox}) / ER$$

with $AH_{max}$ = amount of amine hardener at maximum HDT or $T_g$ in grams

$EEW_{epox}$ = EEW value of the epoxy resin employed for testing
ER = amount of the epoxy resin employed for testing in grams

In connection with this invention, the determination of the $AHEW_{emp}$ is based on maximum $T_g$ (measured by the means of DSC according to standard ASTM D 3418 (2015)). The empirical AHEW is of particular importance for cases, e.g. mixtures of polymeric amines, where the calculated AHEW is not accessible.

The gel time provides, in accordance with DIN 16945 EN (1989) information about the interval between addition of the hardener to the reaction mixture and the conversion of the reactive resin composition from the liquid state to the gel state. The temperature plays an important part here, and the gel time is therefore always determined for a predetermined temperature. By using dynamic-mechanical methods, in particular oscillatory rheometry, it is also possible to study small amounts of specimens quasi-isothermally and to record the entire viscosity curve or stiffness curve for these. In accordance with the standard ASTM D4473 EN (2008), the point of intersection of the storage modulus G' and the loss modulus G", at which the damping tan $\delta$ has the value 1 is the gel point, and the time taken, from addition of the hardener to the reaction mixture, to reach the gel point is the gel time. The gel time thus determined can be considered to be a relative measure of the curing rate for structurally related curing agents.

Shore hardness is a numerical indicator for polymers such as cured epoxy resins which is directly related to the penetration depth of an indenter into a test specimen, and it is therefore a measure of the hardness of the test specimen. It is determined by way of example in accordance with the standard DIN ISO 7619-1 (2010). A distinction is drawn between the Shore A, C, and D methods. The indenter used is a spring-loaded pin made of hardened steel. In the test, the indenter is forced into the test specimen by the force from the spring, and the penetration depth is a measure of Shore hardness. Determination of Shore hardness A and C uses, as indenter, a truncated cone with a tip of diameter 0.79 mm and an insertion angle of 35°, wherein the Shore hardness D test uses, as indenter, a truncated cone with a spherical tip of radius 0.1 mm and an insertion angle of 30°. The Shore hardness values are determined by introducing a scale extending from 0 Shore (penetration depth 2.5 mm) to 100 Shore (penetration depth 0 mm). The scale value 0 here corresponds to the maximum possible impression, where the material offers no resistance to penetration of the indenter. In contrast, the scale value 100 corresponds to very high resistance of the material to penetration, and practically no impression is produced. The temperature plays a decisive part in the determination of Shore hardness, and the measurements must therefore be carried out in accordance with the standard within a restrictive temperature range of 23 °C $\pm$ 2 °C. In the case of floor coatings, it is usually assumed that walking on the floor is possible when Shore D hardness is 45 or above.

The gloss of an epoxy resin coating is adversely affected by carbamate formation during the curing of the coating, and low temperature and high humidity conditions serve to accelerate carbamate formation. Gloss tests can be conducted by applying the curable epoxy resin composition to a matt black surface with a doctor blade. The coatings were cured at specify conditions (temperature, relative humidity, curing time), producing hardened films. Subsequently, the specular gloss can be measured e.g. with a micro-TRI (20°, 60°, 85°) gloss meter (e.g. from Byk Gardner) e.g. with a 20° geometry according to the standard ASTM D523 EN (2014).

Figures

Figure 1: Viscosity development of DGEBA cured with the various adducts and adduct-BnOH mixtures, at a) 23 °C and b) 75 °C.

Figure 2: Development of Shore D hardness over time of DGEBA cured with MCDA-A16, IPDA-A16, and MXDA-A16 adducts at 23 °C and ambient atmosphere.

Figure 3: Adducts (A16; row B) and adduct-BnOH mixtures (A2.5-BnOH; row A) are prepared according to Table 1 and aged at 23 °C and 50 % relative humidity for 48 hours. The presence of carbamates was detected visually through the observation of white precipitate or surface irregularities, as was the case for IPDA-A2.5-BnOH. The figure is a black and white reproduction of 2 photos taken from above against a dark background, each of them showing 6 beakers with the liquid adducts or adduct-BnOH mixtures after the exposed to humidity. In this black and white reproduction, the clear adduct (without carbamate formation) appears black, while the white precipitate or

surface irregularities (due to carbamate formation) appears white. Small white spots in the lower MCDA panel are due to reflection. The A2.5-BnOH examples of MXDA and IPDA in row A exhibit a significant turbidity which is not visible in this black and white reproduction. The A2.5-BnOH examples of MCDA in row A remained clear.

Figure 4: Sensitivity for carbamate formation of pure adducts and adduct-BnOH mixtures aged at 23 °C and 50 % relative humidity, and spectral gloss readings of DGEBA cured with A2.5-BnOH adducts at 8 °C and 70 % relative humidity.

Examples

Materials

Diglycidyl ether of bisphenol A (DGEBA) was obtained from Leuna-Harze GmbH (Epilox® A 19-03, molecular weight = 368 g/mol; EEW = 184 g/mol).

The used methylcyclohexyl diamine (MCDA) consists of all seven isomers (4 stereoisomers of 1-methylcyclohexyl-2,4-diamine (a total of 85 % of the MCDA with 11 % of formula I, 15 % of formula II, 42 % of formula III, and 17 % of formula IV) and 3 stereoisomers of 1-methylcyclohexyl-2,6-diamine (a total of 15 % of the MCDA with 2 % of formula V, 6.5 % of formula VI, and 6.5 % of formula VII). It was obtained from BASF SE (Baxxodur® EC 210, molecular weight = 128.2 g/mol; $AHEW_{emp}$ = 34 g/mol).

For comparison purpose, the diamines isophorone diamine and meta-xylene diamine are used herein.

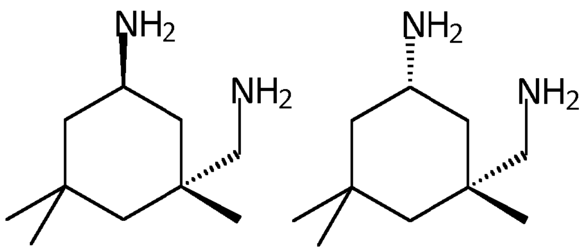

Isomer Mixture of Isophorone Diamine (IPDA)

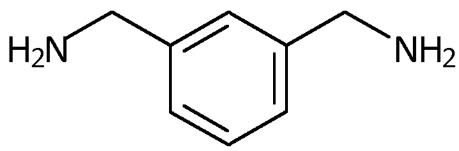

*meta*-Xylene Diamine (MXDA)

The amine hardeners isophorone diamine (IPDA, Baxxodur® EC 201, molecular weight = 170.3 g/mol; $AHEW_{emp}$= 42.6 g/mol) and meta-xylene diamine (MXDA, molecular weight = 136.2 g/mol; $AHEW_{emp}$= 34 g/mol), were obtained from BASF SE and Misubishi Gas Chemical, respectively.

Benzyl alcohol (BnOH) was purchased from Honeywell.

All chemicals were used as received.

Adduct Synthesis

A total of nine amine functional adducts were synthesized with excess amine. The molar mixing ratio of DGEBA to diamine was either 1 : 16, 1 : 8, or 1 : 2.5. For adducts with a molar ratio of 1 : 2.5, BnOH was added to keep viscosity within a workable range. For these adducts BnOH and diamine were employed in equivalent amounts (wt%). Syntheses of the diamine-based adducts (based on the diamines MCDA, IPDA, or MXDA) were performed using the amounts summarized in Table 1. The diamine and - if employed - the BnOH were combined in 1 L round bottom flask under nitrogen atmosphere, subsequently the DGEBA was added dropwise. Following addition, the mixture was stirred to allow for complete reaction. The exothermic reaction started at room temperature and was kept below 100 °C by cooling). The adducts were not isolated or purified following synthesis; all systems synthesized are mixtures of DEGBA/diamine adducts and residual diamine and, if employed, BnOH. For these mixtures the $AHEW_{emp}$ was determined (results thereof are also summarized in Table 1) The use of BnOH allowed epoxy/diamine mixing ratios as low as 1:2.5 for all three

diamines; without the use of solvent, the lowest mixing ratio achievable was 1:8.

Table 1: Summary of adducts and adduct-BnOH mixtures

| Adduct | Mixing Ratio (DGEBA/Diamine) | DEGBA (g) | Diamine (g) | BnOH (g) | $AHEW_{emp}$ (g/eq) |
|---|---|---|---|---|---|
| MCDA-A 16 | 1:16 | 100 | 556 | NA | 42.2 |
| IPDA-A16 | 1:16 | 100 | 740 | NA | 51.1 |
| MXDA-A16 | 1:16 | 100 | 591 | NA | 42.9 |
| MCDA-A8 | 1:8 | 100 | 278 | NA | 48.7 |
| IPDA-A8 | 1:8 | 100 | 370 | NA | 60.6 |
| MXDA-A8 | 1:8 | 100 | 296 | NA | 48.5 |
| MCDA-A2.5-BnOH | 1:2.5 | 200 | 175 | 175 | 91.8 |
| IPDA-A2.5-BnOH | 1:2.5 | 200 | 234 | 234 | 92.5 |
| MXDA-A2.5-BnOH | 1:2.5 | 187 | 175 | 175 | 86.1 |
| (NA: not applied; "Diamine" means MCDA, IPDA or MXDA, depending on the adduct) | | | | | |

Preparation of curable compositions of epoxy resin and adduct

To harden the epoxy resin DGEBA with the prepared adducts or adduct-BnOH mixtures, curable compositions were formulated using a 1 : 1 stoichiometric ratio on the basis of EEW and $AHEW_{emp}$. The compositions of DEGBA and the adducts or adduct-BnOH mixtures were stirred in a propeller mixer at 2000 rpm for 1 min. Immediately following the preparation of the curable composition, differential scanning calorimetry (DSC) and rheological experiments were conducted, and samples for Shore D and spectral gloss measurements were prepared.

Determination of reaction and thermal profile

DSC (204 F1 Pheonix, Netzsch) was used to determine the reaction and thermal profile (onset temperature ($T_o$), peak temperature ($T_p$), glass transition temperature ($T_g$)) according to ASTM D 3418 (2015) using a heating rate of 20 °C/min starting with ambient temperature (23 °C). For comparision, the reaction and thermal profile was also determined for the corresponding pure diamines. When employing a stoichiometric mixing ratio in the absence of BnOH, adduction of MCDA, IPDA, and MXDA led to a slight decrease in the onset and peak exotherm temperature, and a slight increase in $T_g$, as compared the pure diamines. Both MCDA and IPDA are cycloaliphatic amines containing two primary amines, resulting in similar polymeric backbone structures and $T_g$. Comparatively in MXDA, a methyl group separates the amine groups from the aromatic core, leading to more backbone flexibility and a lower $T_g$. As expected, the adducts employing BnOH saw a reduction in $T_g$, by 40 to 70 °C. The DSC results are summarized in Table 2.

Table 2: Thermal properties of DGEBA hardened with adducts and adduct-BnOH mixtures

| | Onset (°C) | Peak (° C) | $T_g$ (°C) |
|---|---|---|---|
| MCDA | 77 | 108 | 168 |
| IPDA | 73 | 103 | 159 |
| MXDA | 75 | 101 | 124 |
| MCDA-A 16 | 74 | 105 | 170 |
| IPDA-A16 | 72 | 101 | 164 |
| MXDA-A16 | 72 | 99 | 126 |
| MCDA-A8 | 71 | 104 | 171 |
| IPDA-A8 | 69 | 100 | 163 |
| MXDA-A8 | 69 | 98 | 127 |

(continued)

| | Onset (°C) | Peak (° C) | $T_g$ (°C) |
|---|---|---|---|
| MCDA-A2.5-BnOH | 57 | 94 | 98 |
| IPDA-A2.5-BnOH | 49 | 87 | 94 |
| MXDA-A2.5-BnOH | 53 | 89 | 86 |

Determination of rheological profile

The rheological profiles (initial viscosity, pot-life and gel time) at 23 °C and of 75 °C were determined using a conventional shear stress-controlled plate-plate rheometer (MCR 301, Anton Paar) with a plate diameter of 15 mm and a gap distance of 0.25 mm, using rotational mode (pot-life) or under oscillatory forces (gel time). The pot-life was the time at a given temperature needed to attain a viscosity of 10,000 mPas. The gel point was defined as the crossover point of the storage and loss moduli and the gel time was defined as the time taken, from addition of the hardener to the reaction mixture, to reach the gel point. The rheological results are summarized in Table 3. Greater differences were observed when comparing the rheological profile of DGEBA cured with MCDA-adducts versus IPDA-adducts or MXDA-adducts. For example, MXDA-A16 formulated with DGEBA had the lowest initial viscosity, followed by MCDA-A16 and then IPDA-A16, at room temperature. At an elevated temperature of 75 °C, MCDA-A16 formulated with DGEBA displayed the lowest initial viscosity, with the initial viscosities of formulated MXDA-A16 and IPDA-A16 adducts being very similar to one another. Additionally, the viscosity evolution of DGEBA formulation with the various adducts was found to differ. For example, as shown in Figure 1, although formulations employing MCDA-A16 have a higher initial viscosity those with MXDA-A16, the formulated viscosity of the MCDA-A16 progress more slowly, yielding a longer pot-life. Pot-life is influenced by a combination of two factors, the initial viscosity and the rate of reaction, so although MXDA-A16 has a lower initial viscosity, it reacts more quickly than MCDA-A16. This trend is also visible in the time to gel, where formulated MXDA-A16 was found to reach gel-point in the shortest amount of time, followed by IPDA-A16 and then MCDA-A16. Because all A16 adducts theoretically have the same functionality, MXDA's fast gel-time is indicative of its faster reaction rate.

Table 3: Rheological properties of DGEBA hardened with adducts and adduct-BnOH mixtures

| | Initial Viscosity (mPas) | Pot-Life (min) | Gel-Time (min) | Initial Viscosity (mPas) | Pot-Life (min) | Gel Point (min) |
|---|---|---|---|---|---|---|
| | 23 °C | | | 75 °C | | |
| MCDA-A 16 | 3,460 | 86 | 633 | 108 | 17 | 41 |
| IPDA-A16 | 5,280 | 43 | 421 | 149 | 13 | 37 |
| MXDA-A16 | 2,360 | 75 | 333 | 146 | 10 | 21 |
| MCDA-A8 | 7,130 | 27 | 561 | 167 | 15 | 41 |
| IPDA-A8 | >10,000 | NA | 396 | 263 | 11 | 33 |
| MXDA-A8 | 4,800 | 34 | 257 | 269 | 9 | 19 |
| MCDA-A2.5-BnOH | >10,000 | NA | 536 | 281 | 10 | 20 |
| IPDA-A2.5-BnOH | >10,000 | NA | 481 | 358 | 9 | 18 |
| MXDA-A2.5-BnOH | >10,000 | NA | 227 | 340 | 5 | 6 |
| (NA: not applied) | | | | | | |

Determination of Shore D hardness

Shore D measurements were conducted by pouring 3 g of a reactive mixture into an aluminum pan with an inner diameter of 30 mm. The systems were cured under two different atmospheric conditions, either 10 °C (65 % relative

humidity) or 23 °C (50 % relative humidity). Shore D hardness measurements were conducted every hour according to DIN ISO 7619-1 (2010) on test specimens with a thickness of 35-36 mm. Shore D development is also dependent on two factors; rate of network density build-up and polymeric backbone stiffness. Here diamines with similar rigidity and functionality are compared, so differences in Shore D development are dependent primarily on the reaction rate. The Shore D results are summarized in Table 4. Unsurprisingly, adducts based on MXDA were found to reach a Shore D over 80 significantly earlier that those adducts based either on IPDA or MCDA (Figure 2). IPDA was found to have a similar performance like MCDA, both in terms of hardness development and tack-free time.

Table 4: Shore D and tack development of DGEBA hardened with adducts and adduct-BnOH mixtures

| Adduct | Shore D > 80 (hrs) | Tack-Free Time (hrs) | Shore D > 80 (hrs) | Tack-Free Time (hrs) |
|---|---|---|---|---|
| | 10 °C, 65% relative humidity | | 23 °C, 50% relative humidity | |
| MCDA-A 16 | 38 | >48 | 12 | 12 |
| IPDA-A16 | 32 | 13 | 10 | 7 |
| MXDA-A16 | 20 | 12 | 6 | 6 |
| MCDA-A2.5-BnOH | 80 | 11 | 16 | 4 |
| IPDA-A2.5-BnOH | 77 | 7 | 17 | 4 |
| MXDA-A2.5-BnOH | 28 | 6 | 6 | 2 |

Determination of carbamate formation

Stability against carbamate formation of the various adducts was determined using two different approaches.

Ease of carbamate formation was visually monitored by placing 3 g of adduct or adduct-BnOH mixtures in 35 mm diameter wells of a 2x3 well-plate. The adducts or adduct-BnOH mixtures were then stored at 23 °C and 50 % relative humidity for 48 hours. Formation of carbamate salts was then detected visually after 2, 4, 6, 8, 16, 24 and 48 hours, through the observation of white precipitate or surface irregularities and a photograph was taken after 48 hours (Figures 3 & 4). A significant amount of carbamate salt was visually present in MXDA-A16 after only 2 hours and in IPDA-A16 after 16 hours. Comparatively, although MCDA-A16 turned slightly turbid after 16 hours, no carbamate precipitate was visible in MCDA-A16 even after 48 hours. With adduct-BnOH mixtures, carbamates were first detected in MXDA-A2.5-BnOH after 8 hours, then in IPDA-A2.5-BnOH after 24 hours, and no carbamates or turbidity were visible in MCDA-A2.5-BnOH even after 48 hours. However, it is important to note that the A2.5-BnOH adducts had significantly less, visible carbamate salt than their A16 counterparts.

Furthermore, carbamate formation can be particularly detrimental to gloss. Therefore, the second approach to carbamate detection was to measure spectral gloss after complete curing. Gloss tests were conducted by applying the reactive epoxy/adduct-BnOH mixtures to a matt black surface with a 500 $\mu$m doctor blade. The coatings were cured at 8 °C and 70 % relative humidity for 69 hours, producing hardened films. These low temperature and high humidity conditions serve to accelerate carbamate formation. Specular gloss was measured with a micro-TRI (20°, 60°, 85°) gloss meter from Byk Gardner with a 20° geometry according to ASTM D523 EN (2014). A similar carbamate stability trend was observed, MCDA-A2.5-BnOH had the highest gloss reading of 89, indicating the lowest level of carbamate formation on the coating surface, followed by IPDA-A2.5-BnOH with 85, and then MXDA-A2.5-BnOH with 78 (Figure 4).

## Claims

1. A process for the preparation of a cured epoxy resin by curing a curable composition comprising an epoxy resin and an adduct at a curing temperature in the range of 0 °C to 100 ° C, **characterized in that** the adduct is formed by reacting methylcyclohexyl diamine with a diglycidyl ether diol, and that the composition is exposed to humidity at least part of the initial 24 h time period of the curing starting with the time mixing epoxy resin and adduct of the composition, and wherein the methylcyclohexyl diamine is 1-methylcyclohexyl-2,4-diamine, 1-methylcyclohexyl-2,6-diamine or a mixture thereof.

2. A process for the preparation of an epoxy resin coated material by applying to the surface of the material a curable composition comprising an epoxy resin and an adduct, and subsequently curing the curable composition on the surface at a curing temperature in the range of 0 °C to 100 °C, **characterized in that** the adduct is formed by reacting methylcyclohexyl diamine with a diglycidyl ether diol, and that the composition is exposed to humidity at least part

of the initial 24 h time period of the curing, starting with the time mixing epoxy resin and adduct of the composition, and wherein the methylcyclohexyl diamine is 1-methylcyclohexyl-2,4-diamine, 1-methylcyclohexyl-2,6-diamine or a mixture thereof.

**3.** The process of claim 2, in which the material to be coated is selected from the group consisting of concrete, natural stone, and steel.

**4.** The process of any of the claims 1 to 3, in which the exposure to humidity lasts a total of at least 30 min during the initial time period of curing.

**5.** The process of any of the claims 1 to 4, in which the humidity is relative air humidity having a value of at least 50 %.

**6.** The process of any of the claims 1 to 4, in which the humidity is liquid water which is contact to the surface of the composition.

**7.** The process of any of the claims 1 to 6, in which the temperature for the curing of epoxy resins is in the range of 5 °C to 50 °C.

**8.** The process of any of the claims 1 to 7, in which the diglycidyl ether diol for the preparation of the adduct is selected from a group consisting of diglycidyl ether of bisphenol A, diglycidyl ether of bisphenol F, diglycidyl ether of hydrogenated bisphenol A, and diglycidyl ether of hydrogenated bisphenol F, and any mixture thereof.

**9.** The process of any of the claims 1 to 8, in which the epoxy resin is a diglycidyl ether diol selected from a group consisting of diglycidyl ether of bisphenol A, diglycidyl ether of bisphenol F, diglycidyl ether of hydrogenated bisphenol A, and diglycidyl ether of hydrogenated bisphenol F, and any mixture thereof.

**10.** The process of any of the claims 1 to 9, in which the adduct is prepared by the reaction of methylcyclohexyl diamine and diglycidyl ether diol, by using a molar ratio ranging from 20 : 1 to 2 : 1.

**11.** The process of any of the claims 1 to 10, in which the adduct is formed in the presence of a diluent selected from the group consisting of benzyl alcohol, bisphenol A, and alkyl substituted phenols.

**12.** The process of any of the claims 1 to 10, in which the curable composition comprises also a diluent selected from the group consisting of benzyl alcohol, bisphenol A, and alkyl substituted phenols.

**13.** A mixture for curing epoxy resin, comprising a diluent and an adduct **characterized in that** the adduct is formed by reacting methylcyclohexyl diamine with a diglycidyl ether diol, wherein the diluent is selected from the group consisting of benzyl alcohol, bisphenol A, and alkyl substituted phenols, and wherein the methylcyclohexyl diamine is 1-methylcyclohexyl-2,4-diamine, 1-methylcyclohexyl-2,6-diamine or a mixture thereof.

**14.** The mixture of claim 13, in which the diglycidyl ether diol for the preparation of the adduct is selected from a group consisting of diglycidyl ether of bisphenol A, diglycidyl ether of bisphenol F, diglycidyl ether of hydrogenated bisphenol A, and diglycidyl ether of hydrogenated bisphenol F, and any mixture thereof.

**15.** The mixture of claim 13 or 14, in which the adduct is prepared by the reaction of methylcyclohexyl diamine and diglycidyl ether diol, by using a molar ratio ranging from 20 : 1 to 2 : 1.

**16.** A curable composition, comprising the mixture of any of the claims 13 to 15 and an epoxy resin.

**17.** The curable composition of claim 16, in which the epoxy resin is a diglycidyl ether diol selected from a group consisting of diglycidyl ether of bisphenol A, diglycidyl ether of bisphenol F, diglycidyl ether of hydrogenated bisphenol A, and diglycidyl ether of hydrogenated bisphenol F, and any mixture thereof.

**18.** The cured epoxy resin which is obtained, by curing of the curable composition of claim 17.

## Patentansprüche

1. Verfahren zur Herstellung eines gehärteten Epoxidharzes durch Härten einer härtbaren Zusammensetzung, die ein Epoxidharz und ein Addukt umfasst, bei einer Härtungstemperatur im Bereich von 0 °C bis 100 °C, **dadurch gekennzeichnet, dass** das Addukt durch Umsetzen von Methylcyclohexyldiamin mit einem Diglycidyletherdiol gebildet wird und dass die Zusammensetzung über mindestens einen Teil des anfänglichen 24-h-Zeitraums der Härtung ab dem Zeitpunkt des Mischens von Epoxidharz und Addukt der Zusammensetzung Feuchtigkeit ausgesetzt wird, und wobei es sich bei dem Methylcyclohexyldiamin um 1-Methylcyclohexyl-2,4-diamin, 1-Methylcyclohexyl-2,6-diamin oder eine Mischung davon handelt.

2. Verfahren zur Herstellung eines mit Epoxidharz beschichteten Materials durch Aufbringen einer härtbaren Zusammensetzung, die ein Epoxidharz und ein Addukt umfasst, auf die Oberfläche des Materials, und anschließendes Härten der härtbaren Zusammensetzung auf der Oberfläche bei einer Härtungstemperatur im Bereich von 0 °C bis 100 °C, **dadurch gekennzeichnet, dass** das Addukt durch Umsetzen von Methylcyclohexyldiamin mit einem Diglycidyletherdiol gebildet wird und dass die Zusammensetzung über mindestens einen Teil des anfänglichen 24-h-Zeitraums der Härtung ab dem Zeitpunkt des Mischens von Epoxidharz und Addukt der Zusammensetzung Feuchtigkeit ausgesetzt wird, und wobei es sich bei dem Methylcyclohexyldiamin um 1-Methylcyclohexyl-2,4-diamin, 1-Methylcyclohexyl-2,6-diamin oder eine Mischung davon handelt.

3. Verfahren nach Anspruch 2, wobei das zu beschichtende Material aus der Gruppe bestehend aus Beton, Naturstein und Stahl ausgewählt wird.

4. Verfahren nach einem der Ansprüche 1 bis 3, wobei das Feuchtigkeitsaussetzen während des anfänglichen Härtungszeitraums insgesamt mindestens 30 min dauert.

5. Verfahren nach einem der Ansprüche 1 bis 4, wobei es sich bei der Feuchtigkeit um relative Luftfeuchtigkeit mit einem Wert von mindestens 50 % handelt.

6. Verfahren nach einem der Ansprüche 1 bis 4, wobei es sich bei der Feuchtigkeit und flüssiges Wasser handelt, das mit der Oberfläche der Zusammensetzung in Kontakt steht.

7. Verfahren nach einem der Ansprüche 1 bis 6, wobei die Temperatur für die Härtung von Epoxidharzen im Bereich von 5 °C bis 50 °C liegt.

8. Verfahren nach einem der Ansprüche 1 bis 7, wobei das Diglycidyletherdiol für die Herstellung des Addukts aus der Gruppe bestehend aus Diglycidylether von Bisphenol A, Diglycidylether von Bisphenol F, Diglycidylether von hydriertem Bisphenol A und Diglycidylether von hydriertem Bisphenol F und einer beliebigen Mischung davon ausgewählt wird.

9. Verfahren nach einem der Ansprüche 1 bis 8, wobei es sich bei dem Epoxidharz um ein Diglycidyletherdiol aus der Gruppe bestehend aus aus Diglycidylether von Bisphenol A, Diglycidylether von Bisphenol F, Diglycidylether von hydriertem Bisphenol A und Diglycidylether von hydriertem Bisphenol F und einer beliebigen Mischung davon handelt.

10. Verfahren nach einem der Ansprüche 1 bis 9, wobei das Addukt durch Umsetzung von Methylcyclohexyldiamin und Diglycidyletherdiol durch Verwendung eines Molverhältnisses im Bereich von 20:1 bis 2:1 hergestellt wird.

11. Verfahren nach einem der Ansprüche 1 bis 10, wobei das Addukt in Gegenwart eines Verdünnungsmittels aus der Gruppe bestehend aus Benzylalkohol, Bisphenol A und alkylsubstituierten Phenolen gebildet wird.

12. Verfahren nach einem der Ansprüche 1 bis 10, wobei die härtbare Zusammensetzung außerdem ein Verdünnungsmittel aus der Gruppe bestehend aus Benzylalkohol, Bisphenol A und alkylsubstituierten Phenolen umfasst.

13. Mischung zum Härten von Epoxidharzen, umfassend ein Verdünnungsmittel und ein Addukt, **dadurch gekennzeichnet, dass** das Addukt durch Umsetzen von Methylcyclohexyldiamin mit einem Diglycidyletherdiol gebildet wird, wobei das Verdünnungsmittel aus der Gruppe bestehend aus Benzylalkohol, Bisphenol A und alkylsubstituierten Phenolen ausgewählt wird und wobei es sich bei dem Methylcyclohexyldiamin um 1-Methylcyclohexyl-2,4-diamin, 1-Methylcyclohexyl-2,6-diamin oder eine Mischung davon handelt.

14. Mischung nach Anspruch 13, wobei das Diglycidyletherdiol für die Herstellung des Addukts aus der Gruppe bestehend aus Diglycidylether von Bisphenol A, Diglycidylether von Bisphenol F, Diglycidylether von hydriertem Bisphenol A und Diglycidylether von hydriertem Bisphenol F und einer beliebigen Mischung davon ausgewählt wird.

15. Mischung nach Anspruch 13 oder 14, wobei das Addukt durch Umsetzung von Methylcyclohexyldiamin und Diglycidyletherdiol durch Verwendung eines Molverhältnisses im Bereich von 20:1 bis 2:1 hergestellt wird.

16. Härtbare Zusammensetzung, umfassend die Mischung nach einem der Ansprüche 13 bis 15 und ein Epoxidharz.

17. Härtbare Zusammensetzung nach Anspruch 16, wobei es sich bei dem Epoxidharz um ein Diglycidyletherdiol aus der Gruppe bestehend aus aus Diglycidylether von Bisphenol A, Diglycidylether von Bisphenol F, Diglycidylether von hydriertem Bisphenol A und Diglycidylether von hydriertem Bisphenol F und einer beliebigen Mischung davon handelt.

18. Gehärtetes Epoxidharz, das durch Härten der härtbaren Zusammensetzung nach Anspruch 17 erhalten wird.

## Revendications

1. Procédé pour la préparation d'une résine époxy durcie par durcissement d'une composition durcissable comprenant une résine époxy et un adduit à une température de durcissement dans la plage de 0 °C à 100 °C, **caractérisé en ce que** l'adduit est formé par mise en réaction d'une méthylcyclohexyldiamine avec un diol diglycidyléther, et **en ce que** la composition est exposée à de l'humidité pendant au moins une partie de la période de temps initiale de 24 h du durcissement commençant avec le moment de mélange de la résine époxy et de l'adduit de la composition, et la méthylcyclohexyldiamine étant la 1-méthylcyclohexyl-2,4-diamine, la 1-méthylcyclohexyl-2,6-diamine ou un mélange correspondant.

2. Procédé pour la préparation d'un matériau revêtu par une résine époxy en appliquant à la surface du matériau une composition durcissable comprenant une résine époxy et un adduit, et subséquemment en durcissant la composition durcissable sur la surface à une température de durcissement dans la plage de 0 °C à 100 °C, **caractérisé en ce que** l'adduit est formé par mise en réaction d'une méthylcyclohexyldiamine avec un diol diglycidyléther, et **en ce que** la composition est exposée à de l'humidité pendant au moins une partie de la période de temps initiale de 24 h du durcissement, commençant avec le moment de mélange de la résine époxy et de l'adduit de la composition, et la méthylcyclohexyldiamine étant la 1-méthylcyclohexyl-2,4-diamine, la 1-méthylcyclohexyl-2,6-diamine ou un mélange correspondant.

3. Procédé selon la revendication 2, le matériau devant être revêtu étant choisi dans le groupe constitué par du béton, de la pierre naturelle et de l'acier.

4. Procédé selon l'une quelconque des revendications 1 à 3, dans lequel l'exposition à de l'humidité dure au total au moins 30 min pendant la période de temps initiale de durcissement.

5. Procédé selon l'une quelconque des revendications 1 à 4, dans lequel l'humidité est l'humidité relative de l'air possédant une valeur d'au moins 50 %.

6. Procédé selon l'une quelconque des revendications 1 à 4, dans lequel l'humidité est de l'eau liquide qui est en contact avec la surface de la composition.

7. Procédé selon l'une quelconque des revendications 1 à 6, dans lequel la température pour le durcissement de résines époxy est dans la plage de 5 °C à 50 °C.

8. Procédé selon l'une quelconque des revendications 1 à 7, dans lequel le diol diglycidyléther pour la préparation de l'adduit est choisi dans le groupe constitué par le diglycidyléther de bisphénol A, le diglycidyléther de bisphénol F, le diglycidyléther de bisphénol A hydrogéné et le diglycidyléther de bisphénol F hydrogéné, et un quelconque mélange correspondant.

9. Procédé selon l'une quelconque des revendications 1 à 8, dans lequel la résine époxy est un diol diglycidyléther choisi dans un groupe constitué par le diglycidyléther de bisphénol A, le diglycidyléther de bisphénol F, le diglycidyléther de bisphénol A hydrogéné et le diglycidyléther de bisphénol F hydrogéné, et un quelconque mélange correspondant.

**10.** Procédé selon l'une quelconque des revendications 1 à 9, dans lequel l'adduit est préparé par la réaction d'une méthylcyclohexyldiamine et d'un diol diglycidyléther, en utilisant un rapport molaire dans la plage de 20 : 1 à 2 : 1.

**11.** Procédé selon l'une quelconque des revendications 1 à 10, dans lequel l'adduit est formé en la présence d'un diluant choisi dans le groupe constitué par l'alcool benzylique, le bisphénol A et des phénols substitués par alkyle.

**12.** Procédé selon l'une quelconque des revendications 1 à 10, dans lequel la composition durcissable comprend également un diluant choisi dans le groupe constitué par l'alcool benzylique, le bisphénol A et des phénols substitués par alkyle.

**13.** Mélange pour le durcissement d'une résine époxy, comprenant un diluant et un adduit **caractérisé en ce que** l'adduit est formé par mise en réaction d'une méthylcyclohexyldiamine avec un diol diglycidyléther, le diluant étant choisi dans le groupe constitué par l'alcool benzylique, le bisphénol A et des phénols substitués par alkyle, et la méthylcyclohexyldiamine étant la 1-méthylcyclohexyl-2,4-diamine, la 1-méthylcyclohexyl-2,6-diamine ou un mélange correspondant.

**14.** Mélange selon la revendication 13, dans lequel le diol diglycidyléther pour la préparation de l'adduit est choisi dans un groupe constitué par le diglycidyléther de bisphénol A, le diglycidyléther de bisphénol F, le diglycidyléther de bisphénol A hydrogéné et le diglycidyléther de bisphénol F hydrogéné, et un quelconque mélange correspondant.

**15.** Mélange selon la revendication 13 ou 14, dans lequel l'adduit est préparé par la réaction d'une méthylcyclohexyldiamine et d'un diol diglycidyléther, en utilisant un rapport molaire dans la plage de 20 : 1 à 2 : 1.

**16.** Composition durcissable, comprenant le mélange selon l'une quelconque des revendications 13 à 15 et une résine époxy.

**17.** Composition durcissable selon la revendication 16, dans laquelle la résine époxy est un diol diglycidyléther choisi dans un groupe constitué par le diglycidyléther de bisphénol A, le diglycidyléther de bisphénol F, le diglycidyléther de bisphénol A hydrogéné et le diglycidyléther de bisphénol F hydrogéné, et un quelconque mélange correspondant.

**18.** Résine époxy durcie qui est obtenue, par durcissement de la composition durcissable selon la revendication 17.

Figure 1:

a)

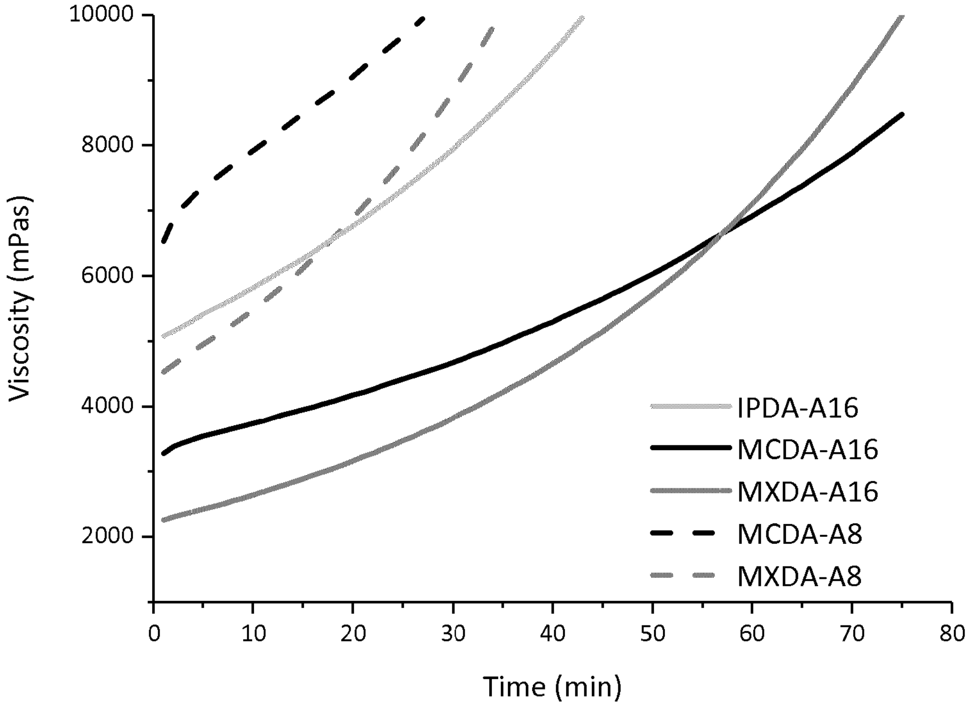
10000
8000
6000
4000
2000
Viscosity (mPas)
0
10
20
30
40
50
60
70
80
Time (min)
IPDA-A16
MCDA-A16
MXDA-A16
MCDA-A8
MXDA-A8

b)

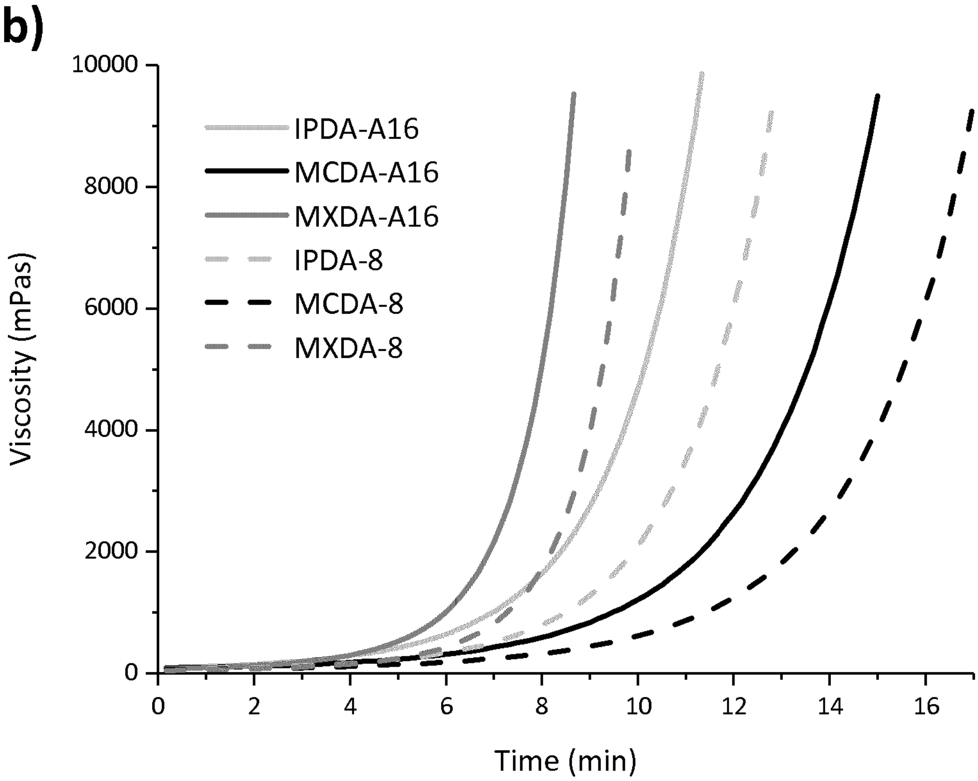
10000
8000
6000
4000
2000
0
Viscosity (mPas)
0
2
4
6
8
10
12
14
16
Time (min)
IPDA-A16
MCDA-A16
MXDA-A16
IPDA-8
MCDA-8
MXDA-8

Figure 2:

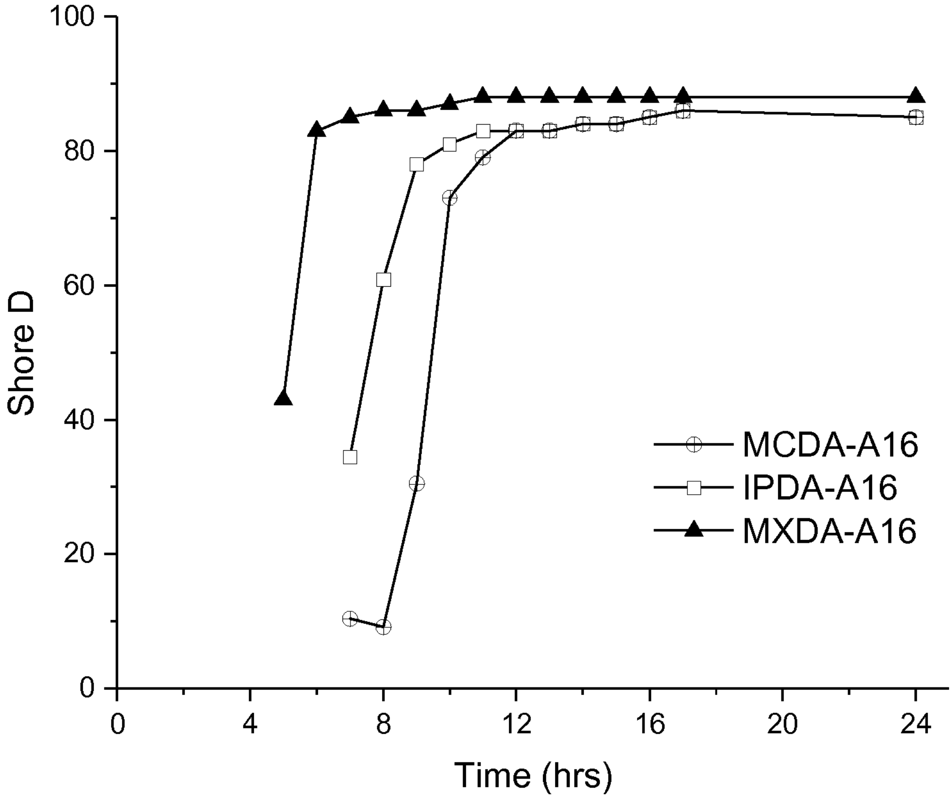


Figure 3:

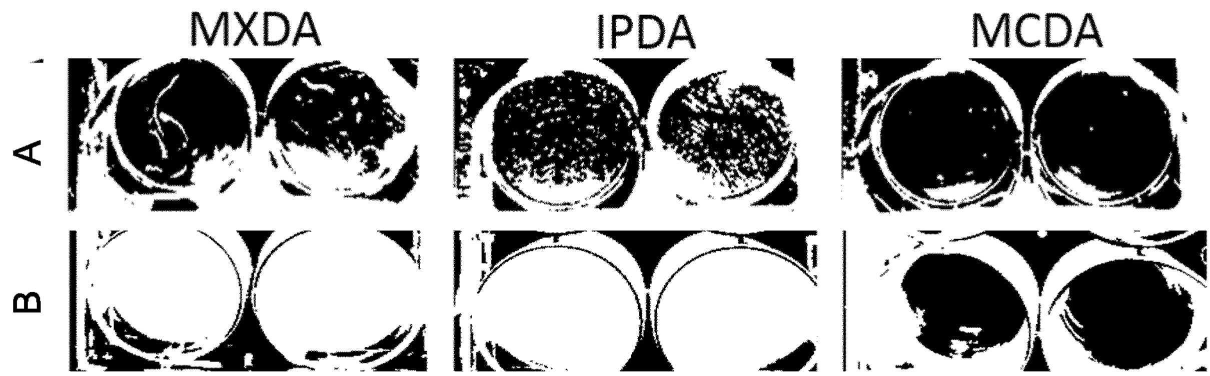

Figure 4:

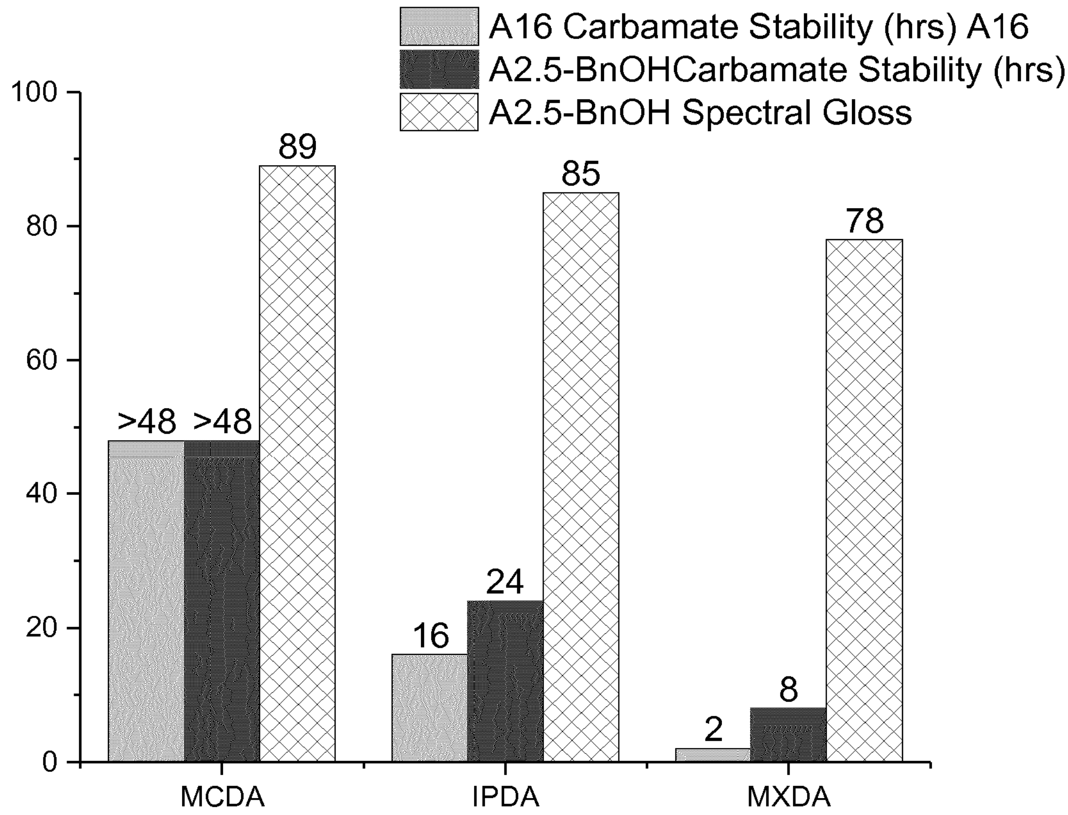
A16 Carbamate Stability (hrs) A16
A2.5-BnOHCarbamate Stability (hrs)
A2.5-BnOH Spectral Gloss
100
80
60
40
20
0
89
85
78
>48
>48
24
16
8
2
MCDA
IPDA
MXDA

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011033104 A


### Non-patent literature cited in the description


- Coatings and other applications of epoxy resins. **CHEN, X. M. ; ELLIS, B.** Chemistry and Technology of Epoxy Resins. Springer, 1993, 303-325
- **PHAM, H. Q. ; MARKS, M. J.** Epoxy Resins. *Ullmann's Encyclopedia of Industrial Chemistry,* 2005
- **T. DINNISSEN.** Amine Blushing and Blooming of Epoxy Binder Systems in Protective Coatings. *J. of Protective Coatings and Linings,* 2005, vol. 22, 40-45
- **WICKS, W. Z. ; JONES, F. N. ; PAPPAS, S. P. ; WICKS, D. A.** Epoxy and Phenolic Resins. In Organic Coatings Science and Technology. Wiley, 2007, 271-293
- **HUNTSMAN.** *Epoxy Formulations using Jeffamine Polyetheramines,* 27 April 2005, 8-11